# EUROPEAN PATENT SPECIFICATION

(11) **EP 0 854 240 B1**
(45) Date of publication and mention of the grant of the patent: **12.03.2003**
(21) Application number: 95932955.8
(22) Date of filing: 03.10.1995
(51) Int. Cl.: E01B 3/46, E01C 13/08

(54) **CONCRETE PRODUCT FOR PROMOTION OF AFFORESTATION**
BETONPRODUKT ZUR FÖRDERUNG DER AUFFORSTUNG
PRODUIT A BASE DE BETON PERMETTANT DE FAVORISER L'AFFORESTATION

(43) Date of publication of application: 22.07.1998
(73) Proprietor: Hirano, Norihiko, Gunma 371 (JP)
(72) Inventor: KOJIMA, Akira, Kiryu-shi, Gunma 376 (JP); HIRANO, Norihiko, Maebashi-shi, Gunma 371 (JP); FURUKAWA, Shigeru, Maebashi-shi, Gunma 371 (JP)
(74) Representative: Leale, Robin George
(86) International application number: JP9502008
(87) International publication number: WO97013040

(56) References cited:
- JP-A- 57 003 090
- JP-A- 57 003 905
- JP-A- 62 280 425
- JP-B- 46 002 961
- JP-Y- 4 039 862
- US-A- 3 323 310
- PATENT ABSTRACTS OF JAPAN vol. 012, no. 157 (M-696), 13 May 1988 & JP 62 276122 A (NAKANO BOSAI GIJUTSU KENKYUSHO:KK), 1 December 1987
- PATENT ABSTRACTS OF JAPAN vol. 096, no. 001, 31 January 1996 & JP 07 247561 A (KUMAGAI GUMI CO LTD;OTHERS: 01), 26 September 1995

## Description

### TECHNICAL FIELD

The present invention relates to concrete products to be used under the environmental conditions wherein microorganisms and plants can grow. Especially, the invention relates to concrete products for promotion of afforestation suitable for providing the surface of the concrete product body with green planting.

### BACKGROUND ART

Recently, re-appraisal of natural environment, especially review of natural sight and urban scene have come to be regarded as being important. Above all, because the levee, walls of river or seashore banks, protective walls of railway line, side wall of road, etc. constructed by concrete structure, are formed of gray concrete which gives cool image, they have been desired to be of green color which gives refreshing and bright image.

In reflection of the social requirements calling for such green scene, there have been developed and produced plant-grown concrete blocks and green-compatible concrete, etc. And, the former plant-grown concrete has a structure of porous concrete block in the space of which the plant base materials comprising inorganic special soil dispersed with plant seeds are filled, so that the concrete surface is covered with green in several months.

With respect to the latter green-compatible concrete, the product is designed to be applied mainly to the structures, and developed with the aim of covering the roof and wall surface of buildings. It is so designed as to place covered soil on the surface of porous concrete and sowing plant seeds therein.

Furthermore, there has been developed on trial in the research stage water quality purifying concrete which is attempted to purify water quality by propagating aquatic plants. This scheme is to make porous concrete and allow aquatic plants to grow in the spatial part thereof.

In the plant-grown concrete block as described above, because the seeds of plant are dispersed in advance in the space of porous concrete block, green-growing can be attained in a short period of several months. However, the opening area in the block surface of the porous concrete block in which the special soil is filled is only slight in the surface area of the block, and accordingly, the amount of the plants to be grown, i.e., green-growing amount, is limited. Furthermore, unless the seeds are dispersed, green-growing can never be attained.

In the case of the green-planted concrete, unless seeds are sown in the covering soil placed on the surface of the porous concrete, no green-growing can be attained.

Furthermore, in the water quality purifying concrete comprising porous concrete, unless seeds of aquatic plant are planted in the space part, very long period of time is required before the aquatic plant naturally grows.

As reviewed above, according to the varieties of conventional green-growing means in the concrete products, unless seeds of plant are filled or planted in the concrete product, greening of concrete medium has been difficult.

The present invention has been made in consideration of the problematic points of the conventional technique as above, and its object is to provide concrete products for promotion of afforestation with which the naturally settled seeds of plant germinate and grow to realize green growing, without necessitating to fill or plant seeds on the concrete product body, by providing the surface of the concrete product body into a state easy for the microorganisms to settle, and in case of the use in water such concrete product can serve to attain water purification through formation of organism membranes by settlement of microorganisms.

### DISCLOSURE OF THE INVENTION

In order to attain the above object, in the concrete product for promotion of afforestation according to claim 1, the product comprises carbon fibers planted at predetermined positions of the outer surface of a concrete body, to be used under the environment where sufficient amount of water necessary for accelerating germination of seeds is supplied, said carbon fibers comprising soft and flexible carbon fiber filaments bundled in a strand form, with an end part thereof being embedded and fixed in the concrete body, and the other end part being kept in a bundled state to some extent in the atmosphere and becoming separated in water to allow each filament to float freely.

In claim 2, in a concrete product for promotion of afforestation according to claim 1, a large number of carbon fibers are planted at a predetermined interval on the concrete body, and on the whole surface of the area in which said carbon fibers are planted a carbon fiber non-woven fabric formed in a mat style by compression of elastic and flexible carbon fiber filaments is laid. The non-woven fabric formed in a mat style accelerates adhesion of microorganisms in air or water and seeds of plants flying in.

In claim 3, in a concrete product for promotion of afforestation according to claim 1 or 2, at least the part embedded in the concrete product body of the strand bundle is shaped in a braid form. The braid part facilitates setting onto the reinforcement provided in the concrete body.

In claim 4, in a concrete product for promotion of afforestation according to claim 1, 2 or 3, at least the part facing the surface layer of the concrete product body of strand form bundle is covered with a protective member. The protective member prevents breakage of the carbon fiber filaments.

In claim 5, in a concrete product for promotion of afforestation according to claim 4, the protective member is constituted by a synthetic resin or rubber which is highly elastic and less apt to damage the carbon fiber filament.

In claim 6, in a concrete product for promotion of afforestation according to claim 4 or 5, the part facing the surface layer of the concrete body of the strand form bundle is provided with a cylindrical second protective member of metal or resin having high strength and excellent durability surrounding said protective member. In the inside of the cylindrical second protective member, it becomes possible for an adhesive having rich elasticity to be filled, and to elevate bend resilience of the braid part.

Further, the operation of the present invention will be explained.

Carbon fiber is charged with plus electric charge, and the microorganisms which exist in the large number in air or water tend to be charged with minus charge. Accordingly, these microorganisms tend to settle on the carbon fibers planted on the surface of the concrete product body. Especially, by forming the carbon fiber filaments in a shape of bundling in strand form, or by compounding the strand form bundle with the mat form shaped body made by compressing the carbon fiber filaments into a non-woven fabric form, there can be secured a large area of carbon fiber to which the microorganisms can settle on the surface of the concrete body.

Under the environment wherein water is supplied to the carbon fiber, the microorganisms which settled on the carbon fiber become sludge. Especially, under the dusty environment such as the side wall of road, dust or waste floating in air is to be deposited on the carbon fiber as sludge. The plant seeds which naturally come flying and settle on the carbon fiber germinate and grow by utilizing the sludge as nutrient.

In the case of the concrete products provided under the water level, in addition to the greening by germination and growth of seeds which float in water and settle on the carbon fiber, the organism membranes are formed by the microorganisms settled on the carbon fiber, and water is purified by them.

The protective member which coats the strand form or braid form carbon fiber reduces the load which acts on the root part of the carbon fiber molding planted on the concrete product body, and prevents the carbon fiber filament from coming into direct contact with the concrete body.

### BRIEF DESCRIPTION OF THE DRAWINGS

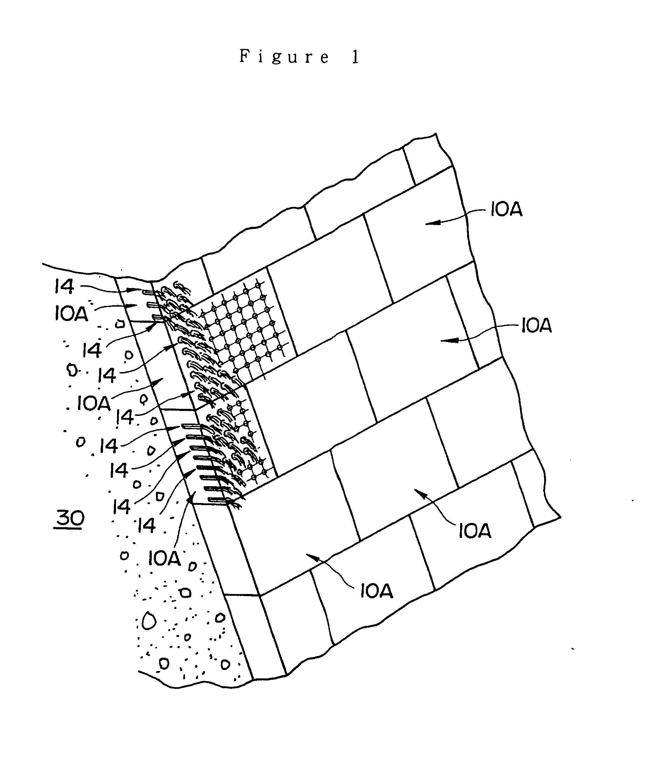

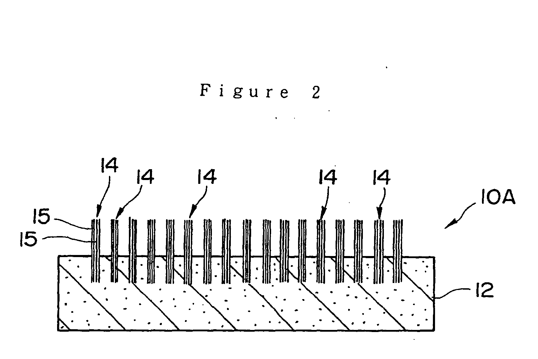

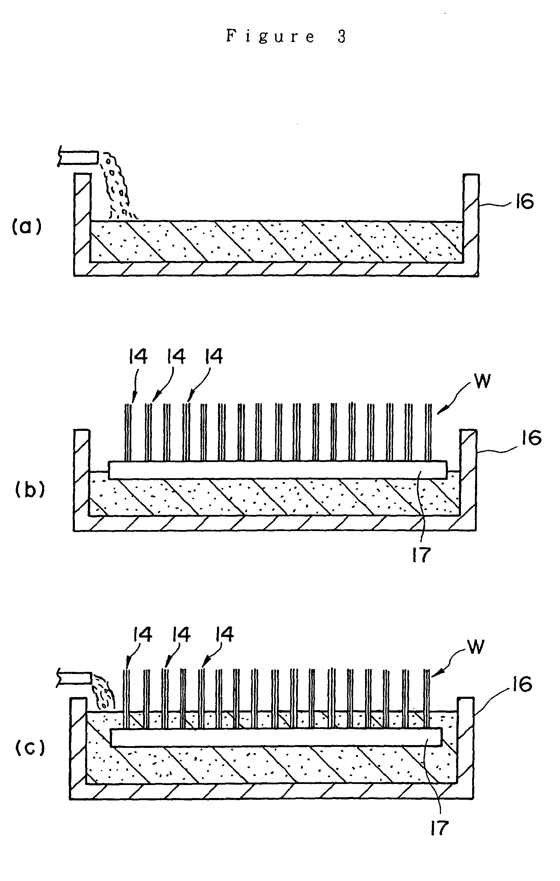

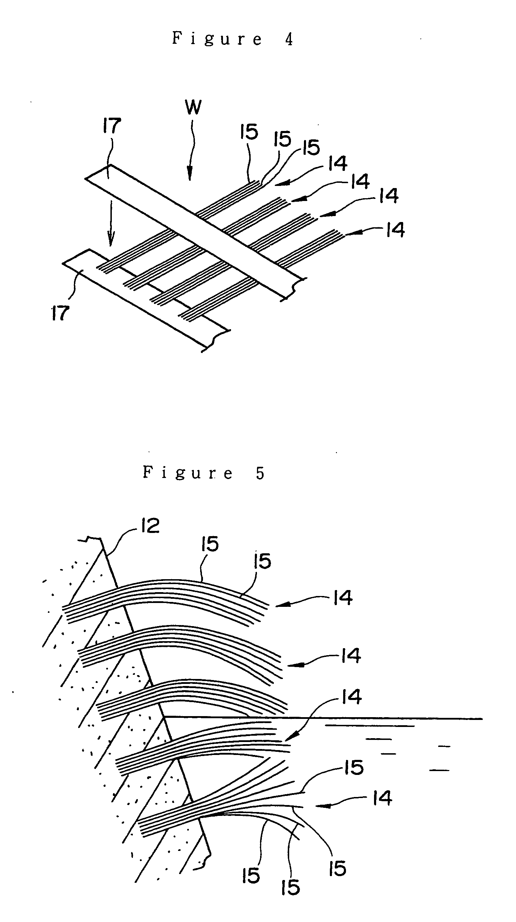

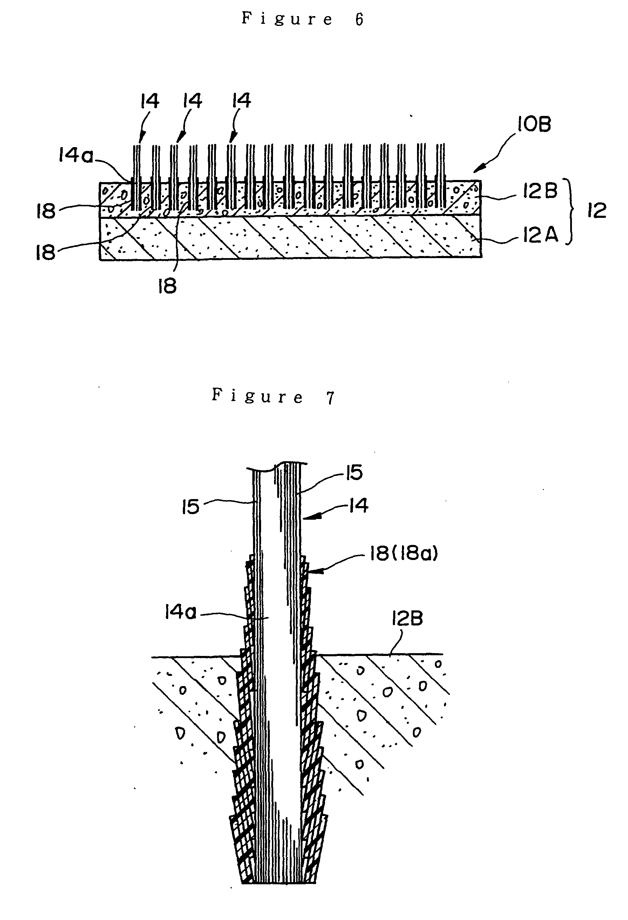

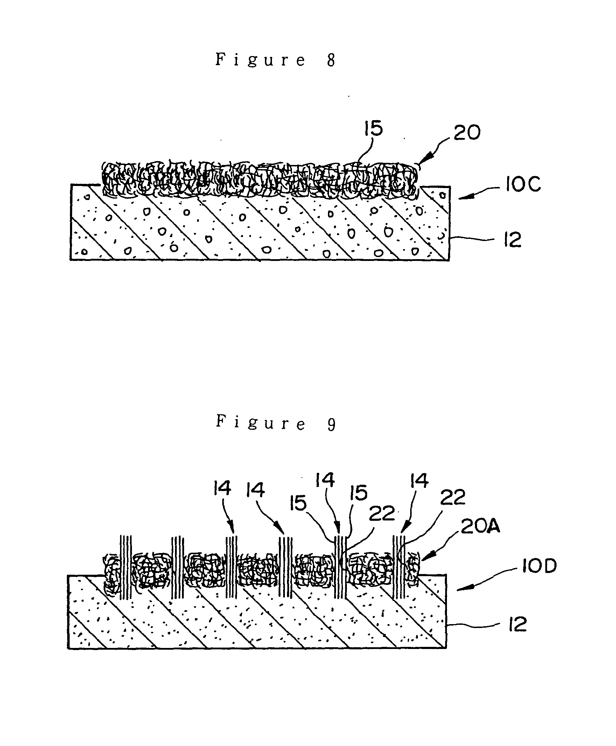

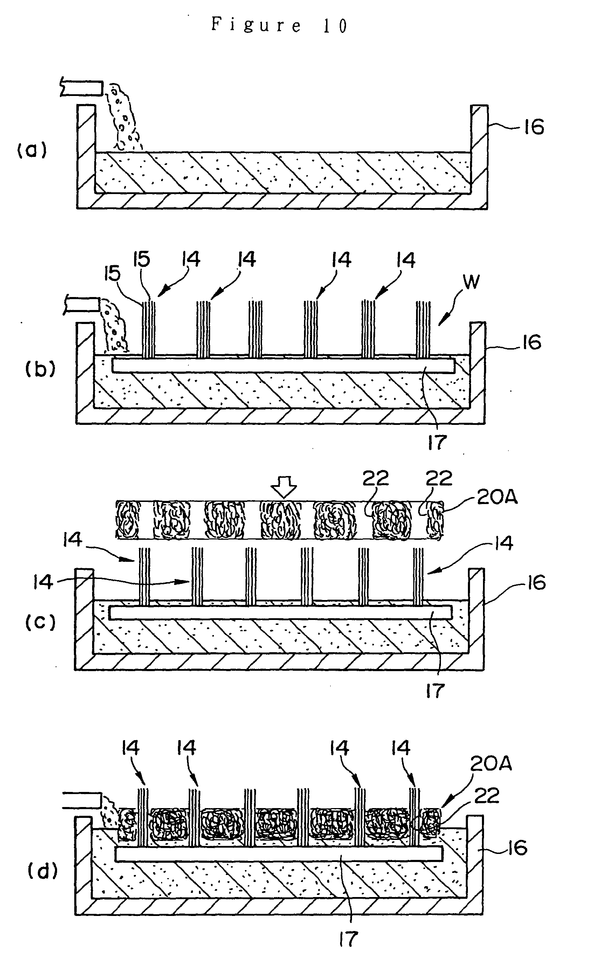

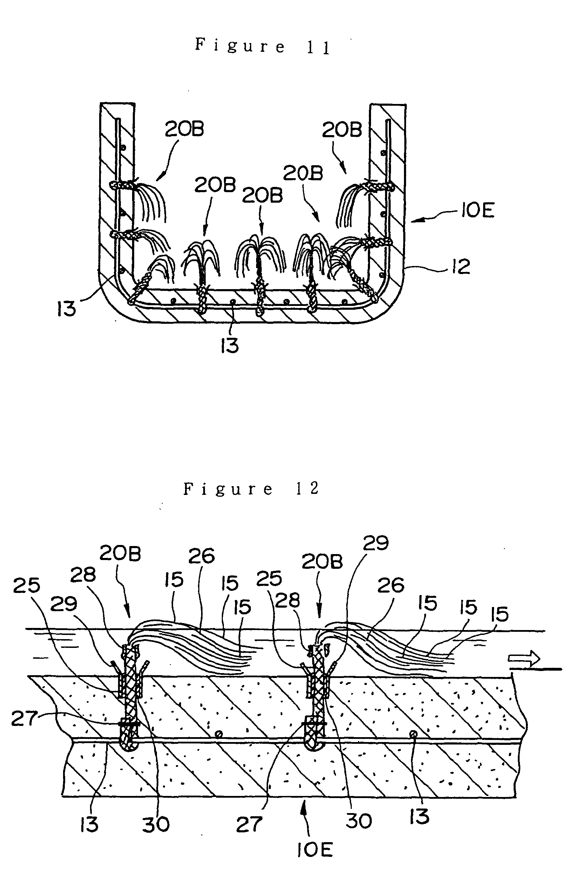

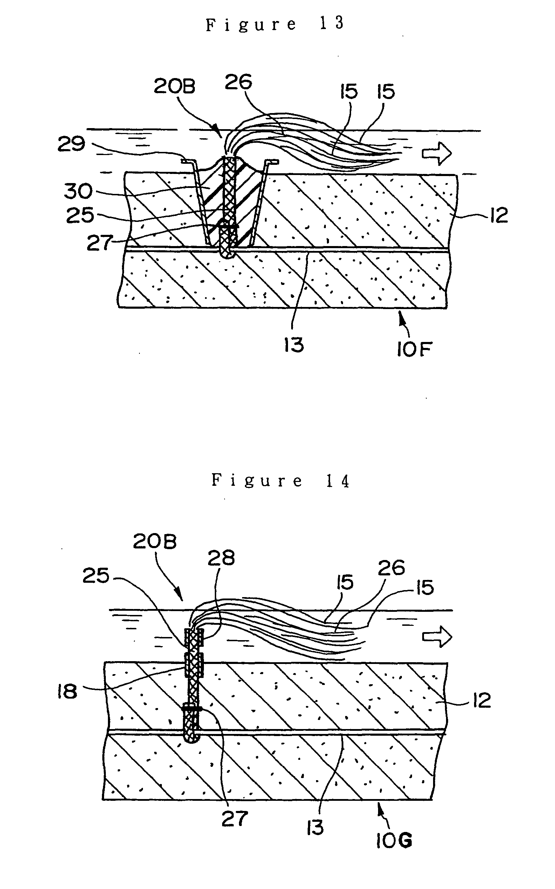

Fig. 1 is a perspective view of the earth-fill wall for forming normal plane of the dam pond constituted by piling up the concrete blocks of the first embodiment of the present invention; Fig. 2 is a sectional view of the said block; Fig. 3 is a view to illustrate the manufacturing steps of said block; Fig. 4 is a view to show the state of adhering the carbon fiber strand to a water-soluble tape; Fig. 5 is a view to explain the action of the carbon fiber filament; Fig. 6 is a sectional view of a concrete-plated block which is the second embodiment of the present invention; Fig. 7 is an enlarged sectional view around the lower end of the carbon fiber strand; Fig. 8 is a sectional view of a concrete covered block which is the third embodiment of the present invention; Fig. 9 is a sectional view of a concrete covered block which is the fourth embodiment of the present invention; Fig. 10 is a view to illustrate the manufacturing step of said block; Fig. 11 is a cross sectional view of the U-shaped block which is the fifth embodiment of the present invention; Fig. 12 is an enlarged cross-sectional view of the U-shaped block; Fig. 13 is a partially enlarged cross sectional view of the U-shaped block which is the sixth embodiment of the present invention; and Fig. 14 is a partially enlarged cross sectional view of the U-shaped block which is the seventh embodiment of the present invention.

### BEST MODE FOR CARRYING OUT THE INVENTION

Preferred embodiments of the present invention are described by way of examples based on the accompanying drawings.

Figs. 1 to 5 show the embodiments in which the present invention is applied to the concrete-lined block for forming soil-filled wall for forming a square face of a pond in the water pumping type dam, wherein Fig. 1 is a perspective view of an earth-fill wall for forming a normal plane of a pond in the water pumping type dam constituted by piling up the concrete-lined blocks of the first embodiment, Fig. 2 is a sectional view of the concrete-lined block; Fig. 3 is a view to illustrate the manufacturing steps of said block, Fig. 4 is a view to show the state of adhering the carbon fiber strand to the water-soluble tape, and Fig. 5 is a view to explain the action of the carbon fiber filament.

This concrete-lined block 10A has such constitution that, as shown in Figs. 1 and 2, carbon fiber strands 14 formed by bundling (several thousand - several tens of thousand filaments) the very fine (e.g., several µ m - several scores µ m in diameter) flexible carbon fiber filaments 15 are planted at a predetermined spatial distance on the surface of the rectangular flat plate type block body 12 comprising dense quality concrete to form an integral body. While the strands 14 are planted on all concrete-lined blocks 10A in Fig. 1, in the drawing, the strand 14 is illustrated on only a part of the concrete-line block 10A, and illustration of the strand 14 in other block 10A is omitted.

In order to produce this block 10A, firstly, as shown in Fig. 3(a), concrete is laid in a type frame 16 to the predetermined depth. Next, as shown in Fig. 4, in a manner to pinch the end of the carbon fiber strand 14 with the band-shaped water-soluble tapes 17, 17, the strands 14 are continuously arranged at a predetermined space to form an integral strand continuous body W. And, as shown in Fig. 3(b), a large number of strand continuous bodies W are held at an equal distance with the carbon fiber strand 14 upright and the tape 17 placed underside in the frame 16, and again the dense quality concrete is laid. When the concrete comes to have solidified state, the tape 17 completely dissolves in concrete to disappear, and the carbon fiber strands 14 are planted at equal distance in a cross form on the surface of the block body 12, thereby producing a concrete-lined block as represented by the mark 10A in Figs. 1 and 2.

Next, explanation is given on the case of using the concrete-lined block 10A as an earth-fill wall for forming a normal plane of the pond of the pumping up type dam.

The concrete block 10A is piled up on the crest 30 along the outer side in the form where the carbon fiber strand 14 faces the pond. Therefore, as shown in Fig. 5, the carbon fiber strand 14 extends approximately vertically to the surface of the concrete block body 12 to become drooping state by own weight at the tip side. And, in the atmosphere, the carbon fiber filaments 15 are kept in a bundled state to some extent, but in water, the carbon fiber filaments 15 become separated from one another to show expanded state in fusiform, and sway like water-weeds or algae according to wave motions or water flow. For this reason, considering that the carbon fiber is apt to be electrified in plus mode and the microorganism tends to be electrified in minus mode, the carbon fiber filaments 15 which are always under water level show a tendency for the microorganisms living in water to settle. Furthermore, because the carbon fiber filaments 15 spread and sway in water, they have many opportunities to come into contact with microorganisms, and accordingly they tend to have settlement of microorganisms. Accordingly, the carbon fiber filaments 15 have settlement of organism membranes and purify water. When the seeds of aquatic plants floating in water settle on the carbon fiber filaments 15, growth of the germinated aqueous plants is accelerated to show green condition by propagation of aquatic plants.

The water level of the pond surface in the pumping up type dam in general varies in the height of several meters, but the carbon fiber filaments 15 which are located near the water level are in an environment of being always fed with water, so that the microorganisms in air or water are apt to settle on the carbon fiber filaments. For this reason, when the seeds of the plants floating on the water surface settle on the carbon fiber filaments and germinate, they take the dead bodies of microorganisms as nutrients and show accelerated growth to provide green-rich state of plant growth.

Fig. 6 and Fig. 7 show the second embodiment of the present invention. Fig. 6 shows a sectional view of the concrete-lined block, and Fig. 7 shows an enlarged sectional view around the lower end part of the carbon fiber strand.

The concrete lined block 10B has a lower layer part 12A comprising dense quality concrete, on which an upper layer part 12B comprising porous concrete is laid, and a carbon fiber strand 14 is planted on the upper layer part 12 to form an integral structure.

The lower end part of the strand 14 is covered with a thermoplastic film 18 of protective member, by which the carbon filament 15 is prevented from coming into contact with the concrete body 12, and the breakage of the carbon fiber filament 15 is prevented. Furthermore, since the carbon fiber strand 14 is covered with the plastic film 18, the bend resilience in the neighborhood of the root 14a of the strand is elevated and the bend stress acting on the root 14a of the strand is reduced, thus providing a structure less easily causing breakage of the carbon fiber filament 15.

The plastic film 18 is provided by winding the band-form film 18a on the strand 14, so that the number of winding of the band-like film 18a is larger toward the lower part of the strand 14 to make a reverse tapered structure wherein the part of the strand 14 buried in the block body 12 is larger toward the lower end. Accordingly, due to the stopgap action (reverse tapered structure at the lower end of the strand) of the plastic film 18, the strand 14 endures use for a long period of time without sliding off and the carbon fiber filament 15 is kept vertically in an upright condition, and sufficiently in swaying condition on the upper end side by the flow of air or water.

In the second embodiment given above, there is adopted a structure wherein the plastic film 18 is to cover the whole buried part of the strand 14 in the block body 12. However, the plastic film 18 may be to coat at least the position of the block body 12 facing the surface layer. The plastic film may be replaced by a rubber band. In other words, the material of the protective member to cover the carbon fiber strand 14 may be highly weather resistant resin or rubber that does not damage the carbon fiber filament.

Fig. 8 shows the third embodiment of the present invention, and sectional view of the concrete-lined block diagram.

In this concrete-lined block 10C, the whole block body 12 comprises porous concrete, and on the surface of the block body 12, a carbon fiber non-woven fabric 20 whose lower face part is imbedded in the block body 12 is laid to form an integrated body.

The carbon fiber non-woven fabric 20 is formed in mat shape by the compression of the carbon fiber filaments 15. The carbon fiber filaments 15 extend in mutually entangled state, and accordingly are liable to have deposition of the microorganisms in air or water or flying plant seeds, and can be concluded as being excellent in aiding growth of plants, i.e., acceleration of green growing.

Figs. 9 and 10 show the fourth embodiment of the present invention, wherein Fig. 9 is a sectional view of a concrete-lined block, and Fig. 10 is an illustration of the manufacturing process of said block.

This concrete-lined block 10D has special feature in the point that both the carbon fiber strands 14 and the carbon fiber non-woven fabric 20A are planted on the surface of the block body 12 comprising dense quality concrete. Namely, the carbon fiber non-woven fabric 20A is provided with a large number of round holes 22, through which the carbon fiber strands 14 thrust to extend upward.

To produce this concrete-lined block 10D, firstly, as shown in Fig. 10(a), concrete is laid in the type frame 16 in the predetermined depth. Next, as shown in Fig. 10(b), strand continuous bodies W, each being made by continuously arranging the strands 14 on a water-soluble tape 17, are arranged at equal distance, and concrete is laid to a depth in which the water-soluble tape 17 is hidden. Next, as shown in Fig. 10(c), a carbon fiber non-woven fabric 20A is placed from above so that the strand 14 thrusts through the round hole 22, and as shown in Fig. 10(d), concrete is laid to the predetermined depth.

While the foregoing embodiments 1 through 4 have been explained with respect to the concrete-filled blocks, there may be mortar blocks comprising mortar-lining, or concrete-mortar lined blocks constituted partly by concrete and partly by mortar. The definition of "concrete" in claim is to include, besides the original concrete, mortar or concrete constituted partly by mortar.

In the foregoing embodiments there have been explained the ones of the style in which the carbon fiber filaments are formed in strand shape, ones of the style formed in non-woven fabric form, and compound ones of them, but they may be formed in woven or knitted style.

Figs. 11 and 12 show an embodiment in which the present invention is applied to the U-shaped groove, wherein Fig. 11 is a cross-sectional view of a U-shaped block for forming U-shaped groove which is the fifth embodiment, and Fig. 12 is an enlarged vertical sectional view of the same U-shaped block.

The U-shaped block 10E has a construction wherein a reinforcement 13 is provided in a block body 12 having open space on the upper part with U-shaped cross-section comprising dense quality concrete. On the inside surface of the block body 12 there are provided at an equal distance the carbon fiber formed members 20B whose base part is braid form and tip side is formed in clusters.

The carbon fiber formed member 20B is constituted by knitting the carbon fiber filaments 15 in a braid shape, so that the filaments become separated in cluster shape from the middle part. The braid part 25 is fixed to the reinforcement 13 by a metal clip 27, and the tip of the braid part 25 is bound with a metal clip 28 to prevent the cluster part 26 from becoming separated beyond necessity.

That is to say, the part of the carbon fiber formed members 20B which are imbedded in the block body 12 is constituted in a style of stout braid 25, so as to be easily bound and fixed to the reinforcement 13, and to have sufficient durability to the load acting on the carbon fiber formed members 20B from outside source. Also, the end part of the braid 25 of the carbon fiber formed members 20B is constituted in a style of clusters 26, so that when water runs inside the U-shaped block 10E, the carbon fiber filaments 15 constituting the clusters 26 simply spread by water flow to sway like water-weeds, thereby accelerating formation of organism membranes by settlement of microorganisms (purification of water).

The part designated by mark 29 is a cylindrical metal protective member having an upper end open in tapered form. By the presence of this cylindrical protective member 29 around the braid part 25, the braid part 25 is prevented from coming into direct contact with the block body 12, so that there is provided a structure less apt to cause breakage of the carbon fiber filaments 15. In the inside of the protective member 29, a resin type adhesive is filled, and the braid part 25 is covered with a highly elastic adhesive 30. Namely, there is such a structure that the braid part 25 is surrounded by an adhesive layer 30 which is the first protective member, and further, the outside thereof is surrounded by the second protective member 29.

The positions for binding the carbon fiber formed members 20B of the reinforcement 13, clips 27, 28 and protective member 29 are covered with the insulating resin films to provide a structure to prevent occurrence of electrolytic erosion between the carbon fiber and the reinforcement 13 (clips 27, 28, and protective member 29).

Also, instead of the reinforcement 13, clip 27, 28 and the insulating film to be formed on the protective member 29, or in addition to the insulating films to be formed on these members, the insulating resin film may be formed on the whole braid part 25. Further, in order to prevent electrolytic erosion, it may be so arranged that the wire materials constituted by the materials having no apprehension for electrolytic erosion to occur with the carbon fibers are laid along the reinforcement 13, so that the carbon fiber formed member 20B is fixed to said wire materials.

Fig. 13 and Fig. 14 show the U-shaped block according to other embodiment of the present invention. In the U-shaped block 10F as shown in Fig. 13, in the inner side of the cylindrical protective member 29 protecting the whole braid part 25 of the carbon fiber formed member 20B, highly elastic adhesive is filled to give such structure that the bend resilience of the braid part 25 is elevated, and the stress acting on the braid part 25 is reduced to elevate further the durability of the braid part 25. The adhesive layer 30 is formed to rise up to the branched position between the braid part 25 and the cluster part 26 so as to prevent the cluster part from becoming separated.

On the other hand, the U-shaped block 10G shown in Fig. 14 has a structure that the plastic film 18 is wound on the position facing the surface layer of the body 12 of the braid part 25.

Other points are the same as those of the foregoing fifth embodiment (Fig. 11, Fig. 12), and the explanation thereon is omitted with the same mark given to the same part.

In the above first to fourth embodiments, the present invention was explained by taking an example of a concrete-lined block which can be utilized as levee or soil stoppage in the product of soil structure, and in the fifth, sixth, and seventh embodiments, the invention was explained with an example of U-shaped block. However, the present invention can be applied to various other concrete blocks or box culverts for levee and earth filling. Further, the present invention can be applied to various concrete products for land road and road flat plate for footpath, block for coating, U-shaped groove, PC girder, etc., and various concrete products for railway use including tie, railway line slab, and the like. Furthermore, the invention can be applied to various concrete products for crossing culvert, rainwater receiver, marine concrete products including harbor and bay use such as wind suppressing block, fishery, shore construction, etc., concrete products for gardening including blocks for flower bed, decorative flat board, etc., and concrete products for construction including flower bed block, decorative block, PC plate, etc. Namely, the present invention is applicable to any such concrete product as to have periodical supply of water by the predetermined water supply means such as sprinkler and be used under the environment in which the seeds of plant can germinate.

### INDUSTRIAL APPLICABILITY

As apparent from the foregoing explanation, according to the concrete products for promotion of afforestation of claim 1, microorganisms are apt to settle on the carbon fibers, the microorganisms become sludge, the seeds of the plants which deposited on the carbon fibers and germinated grow by utilizing the sludge as nutrient, so that green-growth or plant growth on the surface of the concrete products is achieved. Especially, when the concrete product according to claim 1 is used in water, in addition to the green-growth of growth and propagation of aquatic plants, organism membranes are formed by the microorganisms which deposited on the carbon fibers and water purification is attained.

According to claim 2, because of the large surface area of the carbon fiber which is a carrier for deposition of microorganisms, the amount of the microorganisms that can settle on the carbon fiber is large, and the formed microorganism membranes are large. Accordingly, the amount of the sludge which becomes the nutrient for plant growth is large, and the growth and propagation of plants become proportionally vigorous, and further green-growth of plant propagation and/or more purification of water are attained.

According to claim 3, by the fact that at least a part of the elastic and flexible carbon filament is shaped in a braid form, binding and fixing of the carbon fiber filaments to the reinforcement provided in the concrete body is facilitated.

According to claims 4, 5, and 6, during the swaying of the carbon fiber formed member, it does not occur for the carbon fiber filaments to come into contact with the concrete body and eventually cause damage or breakage, so that the durability of carbon fiber formed member is assured, and green-grown state can be preserved for a long period of time.

## Claims

1. A concrete product for promotion of afforestation, comprising carbon fibers planted at predetermined positions of the outer surface of a concrete body (12), to be used under the environment where sufficient amount of water necessary for accelerating germination of seeds is supplied, said carbon fibers comprising elastic and flexible carbon fiber filaments (15) bundled in a strand form (14), with an end part thereof being embedded and fixed in the concrete body, and the other end part being kept in a bundled state to some extent in the atmosphere and becoming separated in water to allow each filament to float freely.

2. A concrete product for promotion of afforestation according to claim 1, wherein a large number of carbon fibers are planted at a predetermined interval on the concrete body, and on the whole surface of the area in which said carbon fibers are planted a carbon fiber non-woven fabric (20) formed in a mat style by compression of elastic and flexible carbon fiber filaments is laid.

3. A concrete product for promotion of afforestation according to claim 1 or 2, wherein at least the part being embedded in the concrete body of said strand form bundle is shaped in a braid form.

4. A concrete product for promotion of afforestation according to claim 1, 2 or 3, wherein at least the part facing the surface layer of the concrete body of said strand form bundle is covered with a protective member (18).

5. A concrete product for promotion of afforestation according to claim 4, wherein said protective member is constituted by a synthetic resin or rubber which is highly elastic and less apt to damage the filament.

6. A concrete product for promotion of afforestation according to claim 4 or 5, wherein the part facing the surface layer of the concrete body of said strand form bundle is provided with a cylindrical second protective member (29) of metal or resin having high strength and excellent durability surrounding said protective member.

## Patentansprüche

1. Betonprodukt zur Förderung der Aufforstung mit Kohlefasern, die an vorbestimmten Positionen der äußeren Oberfläche eines Betonkörpers (12) angeordnet bzw. angelegt sind, um unter der Umgebung verwendet zu werden, bei der eine ausreichende Menge an Wasser, die zum Beschleunigen einer Keimung von Samen notwendig ist, bereitgestellt ist, wobei die Kohlefasern elastische und flexible Kohlefaserfäden (15) umfassen, die in einer Seil- bzw. Litzenform (14) gebündelt sind, mit einem Endteil davon, der in dem Betonkörper eingebettet und fixiert ist, und der andere Endteil in einem gebündelten Zustand zu einem gewissen Grade in der Atmosphäre gebündelt bleibt und in Wasser zerlegt bzw. getrennt wird, um jedem Faden zu ermöglichen, frei zu schwimmen.

2. Betonprodukt zur Förderung der Aufforstung nach Anspruch 1, bei dem eine große Anzahl von Kohlefasern bei vorbestimmten Abständen auf dem Betonkörper angeordnet sind und auf der gesamten Oberfläche des Bereichs, in dem die Kohlefasern angeordnet sind, eine Kohlefaser aus einem Vliesstoff, die als Matte durch Kompression von elastischen und flexiblen Kohlefasern gebildet ist, gelegt ist.

3. Betonprodukt zur Förderung der Aufforstung nach Anspruch 1 oder 2, bei dem zumindest der in dem Betonkörper eingebettete Teil des Litzenformbündels in einer Zopfform bzw. geflochten geformt ist.

4. Betonprodukt zur Förderung der Aufforstung nach einem der Anspruch 1, 2 oder 3, bei dem zumindest der Teil, der der Oberflächenschicht des Betonkörpers des Litzenformbündels zugewandt ist, mit einem Schutzelement (18) abgedeckt ist.

5. Betonprodukt zur Förderung der Aufforstung nach Anspruch 4, bei dem das Schutzelement aus einem Kunstharz oder einem Gummi gebildet ist, das bzw. der hochelastisch ist und wenig geneigt, die Faser bzw. Fäden zu beschädigen.

6. Betonprodukt zur Förderung der Aufforstung nach Anspruch 4 oder 5, bei dem der Teil, der der Oberflächenschicht des Betonkörpers des Litzenformbündels zugewandt ist, mit einem zylindrischen zweiten Schutzelement (29) aus Metall oder Harz versehen ist, mit hoher Widerstandskraft und exzellenter Haltbarkeit, das das Schutzelement umgibt.

## Revendications

1. Produit à base de béton permettant de favoriser l'afforestation, comprenant des fibres de carbone implantées à des positions prédéterminées de la surface extérieure d'un bloc de béton (12), à utiliser dans un environnement où une quantité suffisante d'eau nécessaire à l'accélération de la germination de graines est disponible, lesdites fibres de carbone comprenant des filaments de fibre de carbone (15) élastiques et flexibles groupés en forme de tresse (14), une extrémité de cette dernière étant encastrée et fixée dans le bloc de béton, et l'autre extrémité étant maintenue en faisceau jusqu'à un certain point dans l'atmosphère, et se séparant dans l'eau pour permettre à chaque filament de flotter librement.

2. Produit à base de béton permettant de favoriser l'afforestation selon la revendication 1, dans lequel un grand nombre de fibres de carbone sont implantées à intervalles réguliers sur le bloc de béton, et sur toute la surface de la zone dans laquelle lesdites fibres de carbone sont implantées, on étend un tissu non tissé (20) en fibre de carbone formé en tapis natté par la compression de filaments de fibre de carbone élastiques et flexibles.

3. Produit à base de béton permettant de favoriser l'afforestation selon les revendications 1 ou 2, dans lequel au moins la partie encastrée dans le bloc de béton dudit faisceau en forme de tresse est mise en forme comme une natte.

4. Produit à base de béton permettant de favoriser l'afforestation selon les revendications 1, 2 ou 3, dans lequel au moins la partie faisant face à la couche superficielle du bloc de béton dudit faisceau en forme de tresse est recouverte par un élément protecteur (18).

5. Produit à base de béton permettant de favoriser l'afforestation selon la revendication 4, dans lequel ledit élément protecteur est constitué d'une résine synthétique ou d'un caoutchouc à haute élasticité et moins apte à endommager le filament.

6. Produit à base de béton permettant de favoriser l'afforestation selon les revendications 4 ou 5, dans lequel la partie faisant face à la couche superficielle du bloc de béton dudit faisceau en forme de tresse est munie d'un second élément protecteur cylindrique (29) de métal ou de résine à grande résistance et excellente durabilité entourant ledit élément protecteur.
